# EUROPEAN PATENT SPECIFICATION

(11) **EP 1 041 055 B1**
(45) Date of publication and mention of the grant of the patent: **24.07.2002**
(21) Application number: 00302442.9
(22) Date of filing: 24.03.2000
(51) Int. Cl.: C04B 35/636, C04B 35/195

(54) **Method for producing cordierite-based ceramic honeycomb structure**
Verfahren zum Herstellen einer Bienenwabenstruktur auf Basis von Cordierit
Méthode de production d'une structure nid d'abeilles à base de cordiérite

(30) Priority: 29.03.1999 JP 8625899
(43) Date of publication of application: 04.10.2000
(73) Proprietor: NGK INSULATORS, LTD., Nagoya-City, Aichi Prefecture 467-8530 (JP)
(72) Inventor: Makino, Kyoko, Mizuho-ku, Nagoya-city, Aichi 467-0879 (JP); Noguchi, Yasushi, Mizuho-ku, Nagoya-city, Aichi 467-0832 (JP); Hamanaka, Toshiyuki, Suzuka-city, Mie-prefecture 510-0227 (JP)
(74) Representative: Paget, Hugh Charles Edward

(56) References cited:
- US-A- 4 551 295
- US-A- 5 641 920

## Description

### Background of the Invention and Related Art Statement

The present invention relates to a method for producing a cordierite-based ceramic honeycomb structure by extrusion.

A cordierite-based ceramic honeycomb structure for supporting a catalyst to clean up automobile exhaust gases, is required to be sufficiently resistant to thermal shocks and to withstand the thermal stress generated by a temperature difference within the structure, resulting from rapid heating or cooling at the time when the automobile engine starts or stops.

Japanese Patent Publication (Kokoku) No. 7-61892 discloses a cordierite-based honeycomb structure highly resistant to heat and thermal shocks by using aluminum hydroxide and silica.

The cordierite-based honeycomb structure is also required to have a thinner wall, to cope with the exhaust gas regulations which are becoming more stringent recently. This is to improve its exhaust gas cleaning-up characteristics. Decreasing thickness of the honeycomb structure wall should be pursued without sacrificing its cell density, which is also required to be increased while keeping pressure drop across the structure sufficiently low.

The cordierite-based ceramic honeycomb structure is generally produced by extrusion for its excellent mass productivity, and the cordierite material batch is incorporated with water and an extruding aid, e.g., binder and surfactant, to improve its formability, as disclosed by, e.g., Japanese Patent Laid-Open No. 2-81606.

However, the extrusion of the cordierite-based ceramic honeycomb structure of thinner wall need to increase extrusion pressure, which may cause several problems in the extrusion process, e.g., decreased extrusion rate and increased extruding temperature.

The present invention has been developed to solve the above problems. It is an object of the present invention to provide a method for producing a cordierite-based ceramic honeycomb structure suitable for mass production and giving the structure of thin wall by improving formability of the cordierite body (in particular, lubricity) at the time of extrusion.

### Summary of the Invention

According to the present invention, there is provided a method for producing a cordierite-based ceramic honeycomb structure, comprising steps of:
kneading powdered cordierite raw material together with an extruding aid to prepare a material batch;
extruding the material batch to obtain a formed body; and
drying and then firing the formed body, to produce the honeycomb structure with cordierite as the major component in the crystalline phase,
wherein the material batch is incorporated with 2 - 6 wt% of binder reversibly gelling under heat comprising two types of binders that is, a binder (A), a binder (B) reversibly gelling under heat in which 2% aqueous solution of the binder (A) has a viscosity of 5000 cP or less at 20°C, 2% aqueous solution of the binder (B) has a viscosity of 20000 cP or more at 20°C, and binder (A)/binder (B) (wt. ratio) is 10/90 to 50/50.

In the present invention, the 2% aqueous solution of the binder (A) preferably has a viscosity of 1000 cP or less at 20°C.

Furthermore, the binders (A) and (B) for the present invention are preferably of water-soluble cellulose derivatives, more preferably of at least one of the cellulose derivatives selected from the group consisting of methyl cellulose, hydroxypropyl cellulose, hydroxyethylmethyl cellulose, hydroxypropylmethyl cellulose and hydroxybutyl cellulose.

### Detailed Description of the Invention

In the method of the present invention for producing a cordierite-based ceramic honeycomb structure, the cordierite method batch is incorporated with 2-6 wt% of binder reversibly gelling under heat comprising two types of binders (binders (A) and (B)), reversibly gelling under heat where 2% aqueous solution of the binder (A) has a viscosity of 5000 cP or less at 20°C , 2% aqueous solution of the binder (B) has a viscosity of 20000 cP or more at 20°C, and binder (A)/binder (B) wt. ratio is 10/90 to 50/50.

Thereby the material batch has sufficiently improved formability (in particular, lubricity) at the time of extrusion, to give the honeycomb structure suitable for mass production and of thin partition wall.

Next, the binder reversibly gelling under heat, useful for the present invention, will be described concretely.

The binder reversibly gelling under heat for the present invention is composed of two types of binders, binder (A) and (B), where 2% aqueous solution of the binder (A) has a viscosity of 5000 cP or less at 20°C, 2% aqueous solution of the binder (B) has a viscosity of 20000 cP or more at 20°C, and binder (A)/binder (B) (wt. ratio) is 10/90 to 50/50.

Like this, use of the binder reversibly gelling under heat, composed of the binders (A) and (B) of different viscosity in the above ratio, allows optimization viscosity and lubricity of the material batch for the extrusion process, thereby improving strength and mass productivity of the honeycomb structure.

For the cordierite material batch to fully exhibit its effects, it is essential to incorporate the above reversibly gelling binder in the batch at 2 to 6 wt.%.

Here, it is also essential for the binder to be composed of the binders (A) and (B) in a wt. ratio of 10/90 to 50/50.

The material batch will have an excessively high viscosity, accompanied by decreased lubricity, when the binder (A) content is below 10 wt.%, making the extrusion process difficult and decreasing mass productivity of the honeycomb structure.

When its content is above 50 wt.%, on the other hand, the honeycomb structure as the extrudate will have an insufficient strength, causing operational problems in the subsequent processes.

At this time, the binders (A) and (B) for the present invention are preferably of water-soluble cellulose derivative. Those compounds useful for these binders include methyl cellulose, hydroxypropyl cellulose, hydroxyethylmethyl cellulose, hydroxypropylmethyl cellulose and hydroxybutyl cellulose, which can be used as required.

The present invention is described more concretely by examples, which by no means limit the present invention.

The water-soluble cellulose derivative and honeycomb structure were analyzed by the following methods.

### (Analysis of viscosity of the water-soluble cellulose derivatives)

Viscosity of the 2% aqueous solution of each derivative at 20°C was analyzed by a viscometer, model BL manufactures by Toki Sangyo.

### (Analysis of honeycomb structure (index of shape stability of the honeycomb structure))

The honeycomb structure was cut into the 10 cm long specimen. It was pressed on the center of its section by a plate (31.8 mm in diameter) at a rate of 20 mm/min, to measure the maximum stress (kgf/mm²).

### (Examples 1 to 8, Comparative Examples 1 to 3)

The cordierite material as the major raw material had a composition around its theoretical composition (2MgO·2Al₂O₃·5SiO₂), with SiO₂ content ranging from 42 to 56 wt.% (preferably 47 to 53 wt.%), Al₂O₃ content ranging from 30 to 45 wt.% (preferably 32 to 38 wt.%), and MgO content ranging from 12 to 16 wt.% (preferably 12.5 to 16 wt.%). Talc, kaoline, alumina, silica, aluminum oxide and other cordierite material powders were mixed with each other, to have the above composition.

The cordierite material thus prepared was incorporated with 0.2 to 5 wt.% of potassium laurate as the surfactant, 20 to 35 wt.% of water, and a water-soluble cellulose derivative (hydroxypropylmethyl cellulose) as the binder at a content shown in Table 1, to prepare the cordierite material batch (Examples 1 to 8, Comparative Examples 1 to 3).

**[Table 1]**

| | Water-soluble cellulose derivative (binder) | | | | Binder content in the cordierite material batch (wt.%) |
|---|---|---|---|---|---|
| | Binder 1 | | Binder 2 | | |
| | Viscosity of the 2% aqueous solution at 20°C (cP) | Content in the binder (wt.%) | Viscosity of the 2% aqueous solution at 20°C (cP) | Content in the binder (wt.%) | |
| Example 1 | 50 | 50 | 35000 | 50 | 3 |
| Example 2 | 50 | 50 | 100000 | 50 | 3 |
| Example 3 | 3 | 20 | 40000 | 80 | 3 |
| Example 4 | 400 | 20 | 40000 | 80 | 3 |
| Example 5 | 4000 | 20 | 40000 | 80 | 3 |
| Example 6 | 1000 | 30 | 40000 | 70 | 2 |
| Example 7 | 400 | 10 | 20000 | 90 | 6 |
| Example 8 | 5000 | 20 | 40000 | 80 | 3 |
| Comparative Example 1 | 50 | 10 | 35000 | 90 | 8 |
| Comparative Example 2 | 4000 | 80 | 40000 | 20 | 3 |
| Comparative Example 3 | - | - | 40000 | 100 | 3 |

The well-mixed cordierite material batch was extruded at 500 kg/h by a twin, continuous extruder, into an extruded (formed) honeycomb structure, wall thickness: 100 µm, cell density: 80 cells/cm², and diameter: 100 mmφ.

At this time, pressure in the vicinity of the extrusion die during the extrusion process and the strength of the extruded honeycomb structure were measured. The results are given in Table 2.

Furthermore, the cordierite material batch was mixed and kneaded, and the biscuit degassed by a vacuum soil kneader was extruded at a pressure of 200 kgf/cm² into an extruded (formed) honeycomb structure, wall thickness: 100 µm, cell density: 80 cells/cm², and diameter: 100 mmφ.

At this time, extrusion rate during the extrusion process and the strength of the extruded honeycomb structure were measured at the time of extrusion. The results are also given in Table 2.

**[Table 2]**

| | Extrusion by a biaxial, continuous kneader/extruder (extrusion rate: 500 kg/h) | | Extrusion of the biscuit, kneaded and degassed by a vacuum soil kneader (extrusion pressure: 200 gf/mm²) | |
|---|---|---|---|---|
| | Pressure of the extrusion die at the front (bar) | Honeycomb structure strength (gf/mm²) | Extrusion rate (mm/sec) | Honeycomb structure strength (gf/mm²) |
| Example 1 | 85 | 15 | 27 | 15 |
| Example 2 | 100 | 17 | 23 | 17 |
| Example 3 | 95 | 18 | 25 | 18 |
| Example 4 | 100 | 22 | 23 | 22 |
| Example 5 | 105 | 23 | 21 | 23 |
| Example 6 | 98 | 20 | 22 | 20 |
| Example 7 | 100 | 22 | 23 | 22 |
| Example 8 | 102 | 21 | 24 | 21 |
| Comparative Example 1 | 125 | 20 | 12 | 20 |
| Comparative Example 2 | 95 | 10 | 25 | 10 |
| Comparative Example 3 | 118 | 18 | 14 | 18 |

### (Discussion: Examples 1 to 8 and Comparative Examples 1 to 3)

As shown in Table 2, the extruded honeycomb structures prepared by Examples 1 to 8 simultaneously satisfied mass productivity at the time of extrusion and strength.

On the other hand, when the cordierite material batch was incorporated with the binder at above 6 wt.% (Comparative Example 1), it had an excessively high viscosity, greatly reducing mass productivity during the extrusion process, because of decreased batch fluidity.

Comparative Example 2 used the binder (A) accounting for above 50 wt.% in the binder. As a result, the extruded honeycomb structure had an insufficient strength, causing operational problems in the subsequent processes.

Comparative Example 3 used the binder (B) as the sole binder. The material batch had an excessively high viscosity, and hence insufficient lubricity, making it difficult to extrude the batch and hence to secure sufficient extrusion productivity.

As described above, the method of the present invention for producing a cordierite-based ceramic honeycomb structure improves formability (in particular, fluidity) of the cordierite material batch at the time of extrusion, and hence is suitable for mass production of the extruded honeycomb structure and gives the structure of thin partition wall.

## Claims

1. A method for producing a cordierite-based ceramic honeycomb structure, comprising steps of:
kneading powdered cordierite raw material together with an extruding aid to prepare a material batch;
extruding the material batch to obtain a formed body; and
drying and then firing the formed body, to produce the honeycomb structure with cordierite as the major component in the crystalline phase,
wherein the material batch is incorporated with 2 - 6wt% of binder reversibly gelling under heat comprising two types of binders that is, a binder (A), a binder (B) reversibly gelling under heat in which 2% aqueous solution of the binder (A) has a viscosity of 5000 cP or less at 20°C, 2% aqueous solution of the binder (B) has a viscosity of 20000 cP or more at 20°C, and binder (A)/binder (B) (wt. ratio) is 10/90 to 50/50.

2. The method for producing a cordierite-based ceramic honeycomb structure according to claim 1, wherein the 2% aqueous solution of said binder (A) has a viscosity of 1000 cP or less at 20°C.

3. The method for producing a cordierite-based ceramic honeycomb structure according to claim 1 or 2, wherein said binders (A) and (B) are of water-soluble cellulose derivative.

4. The method for producing a cordierite-based ceramic honeycomb structure according to claim 3, wherein said water-soluble cellulose derivative is one of those selected from the group consisting of methyl cellulose, hydroxypropyl cellulose, hydroxyethylmethyl cellulose, hydroxypropylmethyl cellulose and hydroxybutyl cellulose.

## Patentansprüche

1. Verfahren zur Herstellung einer Keramikwabenstruktur auf Cordierit-Basis, folgende Schritte umfassend:
das Verkneten von pulverförmigem Cordierit-Rohmaterial mit einer Extrudierhilfe, um eine Materialcharge zuzubereiten;
das Extrudieren der Materialcharge, um einen Formkörper zu erhalten; und
das Trocknen und anschließende Brennen des Formkörpers, um die Wabenstruktur mit Cordierit als Hauptkomponente in der kristallinen Phase zu erzeugen,
worin in die Materialcharge 2 bis 6 Gew.-% Bindemittel aufgenommen werden, das unter Wärme reversibel geliert, umfassend zwei Arten von Bindemitteln, nämlich ein Bindemittel (A), ein Bindemittel (B), das unter Wärme geliert, wobei eine 2%ige wässrige Lösung von Bindemittel (A) eine Viskosität von 5.000 cP oder weniger bei 20 °C aufweist, eine 2%ige wässrige Lösung von Bindemittel (B) eine Viskosität von 20.000 cP oder mehr bei 20 °C aufweist und das Gewichtsverhältnis Bindemittel (A)/Bindemittel (B) 10/90 bis 50/50 beträgt.

2. Verfahren zur Herstellung einer Keramikwabenstruktur auf Cordierit-Basis nach Anspruch 1, worin die 2%ige wässrige Lösung von Bindemittel (A) eine Viskosität von 1.000 cP oder weniger bei 20 °C aufweist.

3. Verfahren zur Herstellung einer Keramikwabenstruktur auf Cordierit-Basis nach Anspruch 1 oder 2, worin die Bindemittel (A) und (B) aus wasserlöslichem Cellulosederivat bestehen.

4. Verfahren zur Herstellung einer Keramikwabenstruktur auf Cordierit-Basis nach Anspruch 3, worin das wasserlösliche Cellulosederivat eines derjenigen ist, die aus der aus Methylcellulose, Hydroxypropylcellulose, Hydroxyethylmethylcellulose, Hydroxypropylmethylcellulose und Hydroxybutylcellulose bestehenden Gruppe ausgewählt sind.

## Revendications

1. Méthode de production d'une structure nid d'abeilles en céramique à base de cordiérite comprenant les étapes de :
malaxer une matière première de cordiérite en poudre en même temps qu'un auxiliaire d'extrusion pour préparer un lot de matière ;
extruder le lot de matière pour obtenir un corps formé ; et
sécher puis cuire le corps formé, pour produire la structure nid d'abeilles avec de la cordiérite comme composant majeur dans la phase cristalline,
où le lot de matière est incorporé de 2-6% en poids d'un liant se gélifiant réversiblement à la chaleur comprenant deux types de liants c'est-à-dire un liant (A), un liant (B) se gélifiant réversiblement à la chaleur où une solution aqueuse à 2% du liant (A) a une viscosité de 5000 cP ou moins à 20°C, une solution aqueuse à 2% du liant (B) a une viscosité de 20000 cP ou plus à 20°C et liant (A)/liant (B) (rapport en poids) est de 10/90 à 50/50.

2. Méthode de production d'une structure nid d'abeilles en céramique à base de cordiérite selon la revendication 1, où la solution aqueuse à 2% dudit liant (A) a une viscosité de 1000 cP ou moins à 20°C.

3. Méthode de production d'une structure nid d'abeilles en céramique à base de cordiérite selon la revendication 1 ou 2, où lesdits liants (A) et (B) sont d'un dérivé de cellulose soluble dans l'eau.

4. Méthode de production d'une structure nid d'abeilles de céramique à base de cordiérite selon la revendication 3, où ledit dérivé de cellulose soluble dans l'eau est l'un de ceux sélectionnés dans le groupe consistant en méthyl cellulose, hydroxypropyl cellulose, hydroxyéthylméthyl cellulose, hydroxypropylméthyl cellulose et hydroxybutyl cellulose.
